(19) Europäisches Patentamt / European Patent Office / Office européen des brevets

(11) **EP 3 963 834 B1**

(12) **EUROPEAN PATENT SPECIFICATION**

(45) Date of publication and mention
of the grant of the patent:
**31.07.2024 Bulletin 2024/31**

(21) Application number: **20805982.4**

(22) Date of filing: **16.05.2020**

(51) International Patent Classification (IPC):
**H04L 12/28** (2006.01)   **H04N 7/24** (2011.01)
**G06Q 10/00** (2023.01)   **G06Q 10/06** (2023.01)
**G06Q 50/06** (2024.01)   **H04L 47/10** (2022.01)

(52) Cooperative Patent Classification (CPC):
**G06Q 10/00; G06Q 10/06; G06Q 50/06;**
Y02B 70/3225; Y04S 20/222

(86) International application number:
**PCT/US2020/033307**

(87) International publication number:
**WO 2020/232422 (19.11.2020 Gazette 2020/47)**

(54) **METHOD FOR MANAGING FLOW EQUALIZATION AMONG CONSUMERS ON A COMMON DISTRIBUTION NETWORK**

VERFAHREN ZUR VERWALTUNG VON FLUSSAUSGLEICH ZWISCHEN VERBRAUCHERN IN EINEM GEMEINSAMEN VERTEILUNGSNETZWERK

PROCÉDÉ DE GESTION D'ÉGALISATION DE FLUX ENTRE DES CONSOMMATEURS SUR UN RÉSEAU DE DISTRIBUTION COMMUN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.05.2019 US 201962848642 P**

(43) Date of publication of application:
**09.03.2022 Bulletin 2022/10**

(73) Proprietor: **Astronics Advanced Electronic Systems Corp.**
**Kirkland, WA 98034 (US)**

(72) Inventor: **FIFIELD, Jon, M.**
**Kent, WA 98031 (US)**

(74) Representative: **Manitz Finsterwald**
**Patent- und Rechtsanwaltspartnerschaft mbB**
**Martin-Greif-Strasse 1**
**80336 München (DE)**

(56) References cited:
JP-A- 2013 099 174     US-A1- 2008 140 347
US-A1- 2010 306 353    US-A1- 2015 123 464
US-A1- 2016 198 325    US-A1- 2017 278 199
US-A1- 2018 005 325    US-B1- 6 233 611

**Description**

**CROSS REFERENCE TO RELATED PATENT APPLICATION**

This patent application claims a benefit to the May 16, 2019 filing date of United States Provisional Patent Application Serial No. 62/848,642, titled "Method for Managing Flow Equalization Among Consumers on a Common Distribution Network," by Fifield.

**FIELD OF THE DISCLOSURE**

The subject matter of the present disclosure generally relates to a method to manage a prescribed quantity of flow volume among two or more consumer members having the same maximum consumption volume limit (referred to herein as "identical consumer members") connected in series on a common distribution network.

In one embodiment, the method is applied to In-Flight Entertainment (IFE) power distribution loads in an aerospace application.

**BACKGROUND OF THE DISCLOSURE**

Methods and techniques for flow equalization management within a distribution network, such as with electric systems or fluid flow systems, are commonly applied within industry. Current methods for flow equalization or optimization are dependent on a communication network between consumer devices to facilitate the management of flow volume qualities within the distribution network. The addition of communication networks involves an increase in weight, hardware and software complexity to the over-all system. JP 2013 099174 A discloses a system having a management device connected with power measurement devices of a plurality of users via a network. Therein, a master controller is connected to each regulator or consumption node to directly communicate with each consumption node. US 2018/005325 A1 is related to the identification of attributes of delivered power to a power consumer for identifying whether conventional energy like fossil energy or green electricity, such as from renewable sources like solar, wind, and biomass is consumed.

This disclosure presents a method to manage a prescribed quantity of flow volume using an existing measurement of flow within the network; thereby removing any added communication between consumer members, in order to achieve flow equalization among two or more identical consumer members in the network.

**BRIEF DESCRIPTION OF THE DRAWINGS**

Figure 1 depicts the Scaled Flow management method data flow diagram

Figure 2 depicts the flow distribution network among several consumer members

Figure 3 depicts the Scaled Flow management method illustration.

**DETAILED DESCRIPTION**

The subject matter of the present disclosure generally relates to a method to manage a flow volume using a scaled flow management method which regulates the flow volume for each consumer member, not to exceed a defined maximum input flow volume into a distribution network.

An objective of this method is to minimize the maximum input flow volume, such that any number of consumer members may operate at full consumption levels while other consumers are operating at less than full consumption, based on predetermined flow volume settings. This enables a flow optimization between all consumers throughout the entire distribution network.

The scaled flow management method includes a set of equations to manage the flow optimization effectively and efficiently among identical consumer members within the distribution network.

The flow optimization equation or flow equation is the governing mathematical equation that states the relationship that the sum of all the consumers' consumption, within a common distribution network, is equal to the total amount of input capacity into the network.

**Flow Equation**

The general form for the flow equation relates to the sum of the flow volumes for each consumer (Bx) being equal to the total volume (A1) into the distribution network:

$$A_1 = \sum_{i=1}^{n} B_i$$

Another form of the flow equation is:

$$A_1 = \sum_{i=1}^{n-1} B_i + C_{n-1} \qquad \text{Eq. 1}$$

where C represents the last consumer in the series.

Along with the flow equation, several other equations establish a formulation for the scaled flow management method, which are; a number of management boundaries for the system, a management boundaries limit values, consumer flow value, and flow level factors(s).

**Establish the number of management boundaries (MB)**

Management boundaries are defined as a predetermined number of volume limit values for the purpose of defining a flow volume level for any given consumer member to maintain a total flow equalization in a distribution network.

For a given collection of consumer members, a practical minimum number of boundaries within a distribution network should be established, besides the full power limit; being one of the boundaries.

The following equation will establish a minimum number of boundaries - rounding it up to the next whole number:

$$MB = \left(\frac{n}{2} - 1\right) \qquad \text{Eq. 2}$$

For example; given n =3, being a special case, then Eq 2 would be a value of 1. Therefore, adding a full consumption value with the calculated value on MB, the total number of boundaries would be two.

For another example; given n=6, then Eq 2 would be a value of 3. Which mean, two boundary levels in addition to the full consumption value.

**Establish flow level factor (FlowFact)**

A flow level factor is a ratio between the consumption level value (CLV) and the total consumption value, typically set at 100%, for the purpose of maintaining a desired or mandated consumption flow volume by each consumer member.

The consumption level value is based on the nominal controllability levels of the consumption output amount. The number of flow factor values is based on number of management boundaries.

The flow level factor value is based on the following equation;

$$FlowFact = \frac{Consumption\ Limit\ value\ (CLV)}{Total\ Consumption\ Value} \qquad \text{Eq. 3}$$

For example, given MB = 3, a system required three flow setting; FF1 = 100%, FF2 = 75% and FF3 = 25%. Such that;

$$FlowFact1 = \frac{100\%}{100\%} = 1.0 \qquad \text{Eq. 3a}$$

$$FlowFact2 = \frac{75\%}{100\%} = .75 \qquad \text{Eq. 3b}$$

$$FlowFact3 = \frac{25\%}{100\%} = .25 \qquad \text{Eq. 3c}$$

The flow level factors regulate the maximum flow volumes for any consumer member; where the desired consumption amount of each consumer member may be less than the flow factor set limit.

**Establish management boundaries limits (MBL)**

Given a number of management boundaries (MB) from equation 2, a management boundary limit (MBL) is a value establishing a consumption level, for each member, in which a transition will occur between flow volume settings.
The following are constraints for establishing MBLs:

a) The nth consumer will not need active flow management below full consumption amount.
Rationale: The nth consumer is the last member of the network and will not limit the flow volume below maximum capacity.

b) No more than (n-1) consumers shall limit their flow volume below a predetermined minimum amount.
Rationale: Input system capacity is too small if more than (n-1) consumer amounts are needed to manage every consumer's consumption.

**A) Determine the lower management boundaries limit**

Equation 4 is derived from equation 3 and substituting the minimum required flow volume for all consumer members into the denominator, thus determining the lower boundary limit. This limit value is the minimum amount of flow (n-1) consumer member's base on the use of the lowest flow factor value (Example: FlowFactor3 Eq. 3c).
The lower management boundaries limit is based on equation 2, which infers the following conditions;

1) C(n-1) equals the full load of the nth consumer,
2) All other consumers are set to the lowest flow volume setting

$$LowLimit\ Factor = \frac{CLV}{CLV+(n-1)*FlowFact*CLV} \qquad \text{Eq. 4}$$

Which simplifies to;

$$LowLimit\ Factor = \frac{1}{1+(n-1)*FlowFact(Lowest\ value)} \qquad \text{Eq. 5}$$

Equation 5 infers that the maximum flow volume amount of any device within the network is independent of managing the maximum input flow volume for all consumers connected is series on a comment network.

**B) Determine the next limit factor**

The next limit is based on the next larder value of Flow factor (Example Eq. 3b) load values distributed across n-1 consumers following this relationship;

$$(MB)Limit\ Factor = \frac{(ConsumerMaxLimit*(n)*FlowFact)-ConsumerMaxLimit}{(n-1)*ConsumerMaxLimit}$$

Eq. 6

Which simplifies to;

$$(MB-1)Limit\ Factor = \frac{(n * FlowFact(next\ larger\ value)-1)}{(n-1)}$$

Eq. 7

The last limit factor, MB=1, will have a numerical value of 1.0. The management boundaries limit data will be externally generated and hosted as a data set into the control processor unit within the consumer member device.

**Consumer flow value (CFV)**

The consumer flow value is based on a ratio of the output flow volume measurement, provided as a measured quality from an output flow detector, by the input flow volume value, provided as a measured quality from a input flow detector,

For example, if the input flow to the member is 150% and the consumer member is consuming 50%; then the CFV would be

$$\frac{output\ flow\ volume\ measurment}{input\ flow\ volume\ measurement} = \frac{50\%}{150\%} = 0.33$$

The calculated value of consumer flow is used to compare it to the values provided from the management boundaries limits values.

**Set Flow Fact value**

When a consumer flow value exceeds one of the management boundary limits, a new flow factor value will be communicated to the flow regulator.

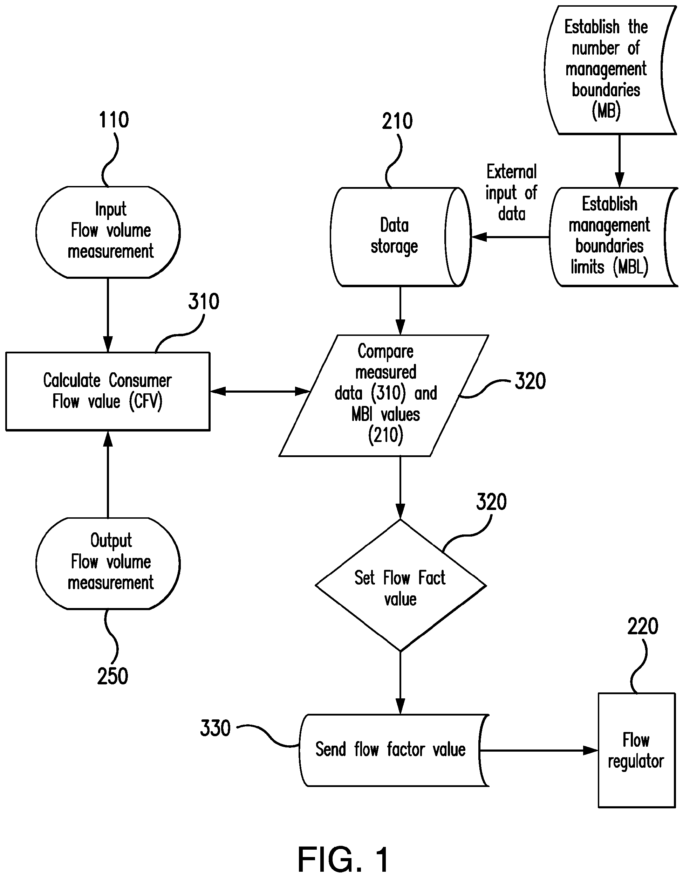

Referencing Fig. 1, the scaled flow management method 300 manages a prescribed quantity of flow volume, among two or more consumer members having the same maximum consumption volume limit (referred to herein as "identical consumer members"), connected in series on a common distribution network. The scaled flow management method 300 receives two inputs measurements, input flow volume measurement 110 and output flow volume measurement 250 and outputs one flow factor value 320.

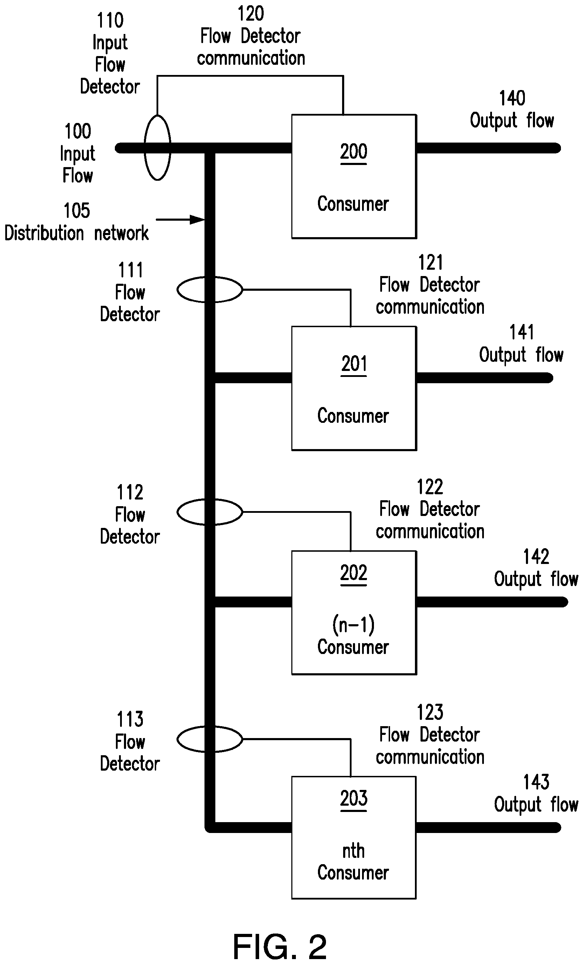

Referencing Fig. 2, the input flow volume measurement 110 is a qualitative measurement of flow, such as, a fluid flow rate in gallons per minute or electrical current flow rate in amperes. Consumers 200 are aligned along the distribution network 105 in series. The distribution network transports a media, which may be a fluid, electrical current, data or any other transportable medium. There is a flow detector 110 - 113 associated with each consumer 200 - 203. Each flow detector communicates 120 - 123 with the scaled flow management system to generate a consumer flow value (310 in Fig. 1).

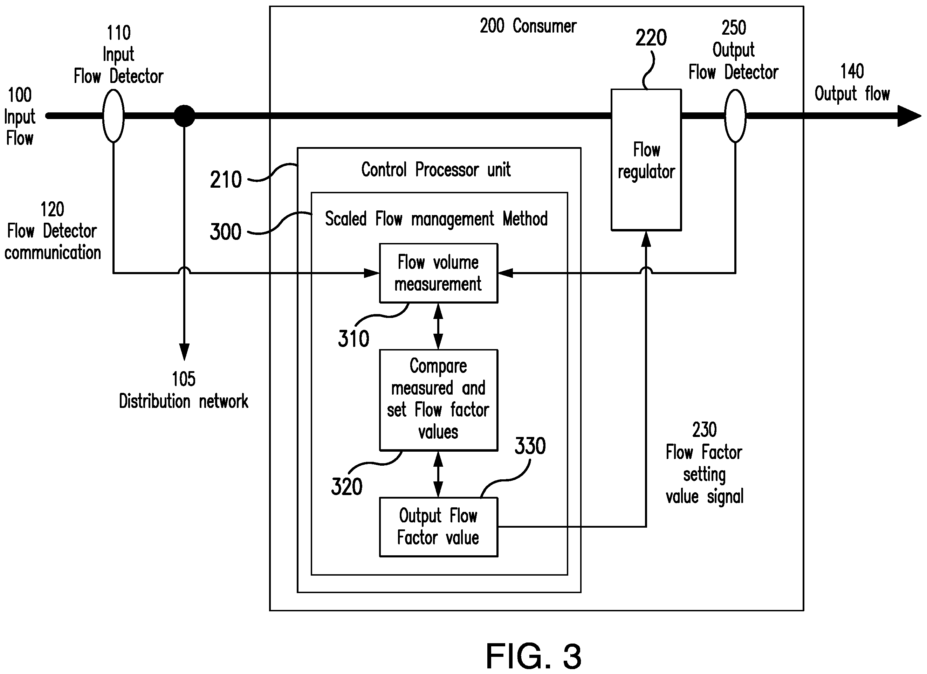

Fig. 3 illustrates the scaled flow management for an individual consumer 200. The input flow is measured 110 and a flow volume measurement 310 is communicated to a scaled flow management system 300 contained within a control processor unit 210. The flow volume measurement is compared to the set flow factor value 320 and an output flow factor value 330 is set. The flow factor setting value is signaled 230 to flow regulator 220. The output flow volume measurement 250 as measured at output flow 140 as a qualitative measurement of flow, such as a fluid flow rate in gallons per minute or electrical current flow rate in amperes.

The calculate consumer flow value 310 is a mathematical ratio between the output flow volume measurement 250 and input flow volume measurement 110 values. The output sampling duty cycle of the calculate consumer flow value 310 will be dependent on the overall flow rate of change for the system. For example, a fluid flow the rate of change can be measured in several hours, therefore the sampling time can be measured once an hour.

The management boundaries 305 are a mathematical equation based on a total number of consumers in the series to establish the value of flow level factors 306. The flow level factor 306 are n number of mathematical equations based on the ratio of consumption level value to the total consumption value, which is typically 100%. The value of n is based on the value of management boundaries 305. The consumption level value is a deterministic value based on the controllability of the consumption output amount. Exemplary, a consumption output may have prescribed controllability outputs of three levels, the number of levels being based on the value of management boundaries 305, such as, 100%, 75% and 25%.

The management boundaries limits 307 are n number of mathematical equations, where each equation is based on a flow level factor 306 value. The value of n is based on the value of management boundaries 305. The lowest numerical management boundaries limit value is based on the smallest numerical flow level factor 306 value in equation 8:

$$LowLimit\ \text{MB}\ Factor\ =\ \frac{1}{1+(n-1)*Lowest\ value\ FlowFact(306)} \qquad \text{Eq. 8}$$

Therefore, each unique management boundaries limit 307 will correspond to a unique flow level factor 306 value.

The next higher management boundary limit 307 corresponds to a mathematical expression not to exceed n-1 equations based on the next larger numerical flow level factor (306) value to be inserted into equation 9.

$$next\_Limit\ Factor\ =\ \frac{(n*FlowFact(next\ larger\ value)-1}{(n-1)} \qquad \text{Eq. 9}$$

The last management boundary limit 307 will be 1.0. This represents the full flow consumption for any consumer.

The output of the set flow factor value 320 is a comparison between each management boundary limit 307 and the calculate consumer flow value 310. The output of set flow fact value 320 will be a unique flow level factor 306 value corresponding to the management boundary limit 307 that is the next larger numerical value of the calculate consumer flow value 310.

The send flow factor 330 is the equivalent flow level factor 306 value by which the flow regulator 400 responds accordingly. The communication medium can be analog, digital or wireless.

## Claims

1. A method (300) for managing consumption of resources by a plurality of consumption devices (200, 201, 202, 203) interconnected by way of a common distribution network (105), the method (300) comprising the following steps:

   aligning the plurality of consumption devices (200, 201, 202, 203) so as to be interconnected by way of the common distribution network (105) configured to provide a respective amount of the resources to each of the consumption devices (200, 201, 202, 203), at least one of the consumption devices (200, 201, 202, 203) having an input flow detector (110, 111, 112, 113) associated with the respective consumption device (200, 201, 202, 203), an output flow detector (250) associated with the respective consumption device (200, 201, 202, 203), and a regulator for setting a permitted amount of resources available to be consumed by the respective consumption device (200, 201, 202, 203);
   selecting a plurality of management boundary levels for the common distribution network (105), each management boundary level corresponding to a different permitted proportion of resources the corresponding regulator of a consumption device (200, 201, 202, 203) may be set to; and
   for each consumption device (200, 201, 202, 203) having a regulator:

      calculating a consumer flow value (310) as a ratio of the output detector (250) indication and the input detector indication (110); and
      setting the regulator to a permitted proportion of resources selected by determining its corresponding least management boundary level which is still greater than the consumer flow value (310).

2. The method (300) of claim 1 wherein the plurality of consumption devices (200, 201, 202, 203) are aligned on the common distribution network (105) in series with respect to their respective input flow detectors (110, 111, 112, 113).

3. The method (300) of claim 1 wherein each consumption device (200, 201, 202, 203) has a same maximum consumption volume limit.

4. The method (300) of claim 3 wherein the resources include fluids, electricity, or data.

5. The method (300) of claim 1 wherein each consumption device (200, 201, 202, 203) has the same consumption levels, but which correspond to different flow values for each consumption device (200, 201, 202, 203).

6. The method (300) of claim 1, wherein the different permitted proportions of resources are determined using a ratio of a consumption limit for a device (200, 201, 202, 203) and an available flow volume of the resources.

7. The method (300) of claim 1, wherein a lowest management boundary level is determined using a ratio of:

$$\frac{1}{1+(n-1)*lowest\ flow\ factor},$$

where there are n consumption devices (200, 201, 202, 203) in the common distribution network (105), and wherein the lowest flow factor corresponds to the lowest permitted proportion of resources.

8. The method (300) of claim 7, wherein each management boundary level larger than the lowest management boundary level is determined using a ratio of:

$$\frac{(n*next\ larger\ flow\ factor)-1}{(n-1)}.$$

9. The method (300) of claim 1, wherein a minimum number of management boundary levels are determined according to the number of consumption devices (200, 201, 202, 203) in the common distribution network (105).

10. The method (300) of claim 1, wherein the consumer flow value (310) is calculated at a frequency according to a duty cycle dependent on the flow rate of the resource.

**Patentansprüche**

1. Verfahren (300) zur Verwaltung eines Verbrauchs von Ressourcen durch eine Vielzahl von Verbrauchereinrichtungen (200, 201, 202, 203), die durch ein gemeinsames Verteilungsnetz (105) miteinander verbunden sind, wobei das Verfahren (300) die Schritte umfasst:

   Ausrichten der Vielzahl von Verbrauchereinrichtungen (200, 201, 202, 203) für eine Verbindung mittels des gemeinsamen Verteilungsnetzes (105), das ausgestaltet ist, um eine jeweilige Menge der Ressourcen für jede der Verbrauchereinrichtungen (200, 201, 202, 203) bereitzustellen, wobei zumindest eine der Verbrauchereinrichtungen (200, 201, 202, 203) eine Eingangsströmungsdetektionseinrichtung (110, 111, 112, 113), die der jeweiligen Verbrauchereinrichtung (200, 201, 202, 203) zugehörig ist, eine Ausgangsströmungsdetektionseinrichtung (250), die der jeweiligen Verbrauchereinrichtung (200, 201, 202, 203) zugehörig ist, und einen Regler zur Festlegung einer zulässigen Menge an Ressourcen, die für einen Verbrauch durch die jeweilige Verbrauchereinrichtung (200, 201, 202, 203) zur Verfügung steht, aufweist;
   Auswählen einer Vielzahl von Verwaltungsbegrenzungsniveaus für das gemeinsame Verteilungsnetz (105), wobei jedes Verwaltungsbegrenzungsniveau einem anderen zulässigen Teil von Ressourcen entspricht, für den der entsprechende Regler einer Verbrauchereinrichtung (200, 201, 202, 203) festgelegt sein kann; und für jede Verbrauchereinrichtung (200, 201, 202, 203), die einen Regler aufweist:

      Berechnen eines Verbraucherströmungswerts (310) als Verhältnis einer Angabe der Ausgangsdetektionseinrichtung (250) und einer Angabe der Eingangsdetektionseinrichtung (110); und
      Festlegen des Reglers für einen zulässigen Teil von Ressourcen, der durch Ermitteln seines entsprechenden geringsten Verwaltungsbegrenzungsniveaus, das noch größer ist als der Verbraucherströmungswert (310), ausgewählt wird.

2. Verfahren (300) nach Anspruch 1, wobei die Vielzahl von Verbrauchereinrichtungen (200, 201, 202, 203) an dem gemeinsamen Verteilungsnetz (105) in Bezug auf ihre jeweiligen Eingangsströmungsdetektionseinrichtungen (110, 111, 112, 113) in Reihe ausgerichtet sind.

3. Verfahren (300) nach Anspruch 1, wobei jede Verbrauchereinrichtung (200, 201, 202, 203) eine gleiche maximale Verbrauchsvolumengrenze aufweist.

**4.** Verfahren (300) nach Anspruch 3, wobei die Ressourcen Fluide, Elektrizität oder Daten umfassen.

**5.** Verfahren (300) nach Anspruch 1, wobei jede Verbrauchereinrichtung (200, 201, 202, 203) die gleichen Verbrauchsniveaus aufweist, die jedoch unterschiedlichen Strömungswerten für jede Verbrauchereinrichtung (200, 201, 202, 203) entsprechen.

**6.** Verfahren (300) nach Anspruch 1, wobei die anderen zulässigen Teile von Ressourcen unter Verwendung eines Verhältnisses einer Verbrauchsgrenze für eine Einrichtung (200, 201, 202, 203) und eines verfügbaren Strömungsvolumens der Ressourcen ermittelt werden.

**7.** Verfahren (300) nach Anspruch 1, wobei ein niedrigstes Verwaltungsbegrenzungsniveau unter Verwendung eines Verhältnisses von:

$$\frac{1}{1 + (n - 1) * \text{niedrigster Strömungsfaktor}}$$

ermittelt wird,
wobei es in dem gemeinsamen Verteilungsnetz (105) n Verbrauchereinrichtungen (200, 201, 202, 203) gibt, und wobei der niedrigste Strömungsfaktor dem niedrigsten zulässigen Teil von Ressourcen entspricht.

**8.** Verfahren (300) nach Anspruch 7, wobei jedes Verwaltungsbegrenzungsniveau, das größer als das niedrigste Verwaltungsbegrenzungsniveau ist, unter Verwendung eines Verhältnisses von:

$$\frac{(n * \text{nächstgrößerer Strömungsfaktor}) - 1}{(n - 1)}$$

ermittelt wird.

**9.** Verfahren (300) nach Anspruch 1, wobei eine minimale Anzahl von Verwaltungsbegrenzungsniveaus gemäß der Anzahl von Verbrauchereinrichtungen (200, 201, 202, 203) in dem gemeinsamen Verteilungsnetz (105) ermittelt wird.

**10.** Verfahren (300) nach Anspruch 1, wobei der Verbraucherströmungswert (310) mit einer Frequenz gemäß einem Arbeitszyklus, der von der Strömungsrate der Ressource abhängt, berechnet wird.

**Revendications**

**1.** Procédé (300) pour gérer la consommation de ressources par une pluralité de dispositifs de consommation (200, 201, 202, 203) interconnectés au moyen d'un réseau de distribution commun (105), le procédé (300) comprenant les étapes consistant à :

aligner la pluralité de dispositifs de consommation (200, 201, 202, 203) de manière à ce qu'ils soient interconnectés au moyen du réseau de distribution commun (105) configuré pour fournir une quantité respective de ressources à chacun des dispositifs de consommation (200, 201, 202, 203), au moins l'un des dispositifs de consommation (200, 201, 202, 203) ayant un détecteur de flux d'entrée (110, 111, 112, 113) associé à respectif dispositif de consommation (200, 201, 202, 203), un détecteur de flux de sortie (250) associé à respectif dispositif de consommation (200, 201, 202, 203) et un régulateur pour régler une quantité permise de ressources disponibles pouvant être consommées par le dispositif de consommation respectif (200, 201, 202, 203) ;
sélectionner une pluralité de niveaux de limites de gestion pour le réseau de distribution commun (105), chaque niveau de limite de gestion correspondant à une proportion permise différente de ressources sur laquelle le régulateur correspondant d'un dispositif de consommation (200, 201, 202, 203) peut être réglé ; et
pour chaque dispositif de consommation (200, 201, 202, 203) doté d'un régulateur :

calculer une valeur de flux de consommation (310) comme un rapport entre l'indication du détecteur de sortie (250) et l'indication du détecteur d'entrée (110) ; et
régler le régulateur sur une proportion permise de ressources sélectionnée en déterminant son niveau de limite de gestion le plus bas correspondant qui est encore supérieur à la valeur de flux de consommation (310).

2. Procédé (300) selon la revendication 1, dans lequel la pluralité de dispositifs de consommation (200, 201, 202, 203) sont alignés sur le réseau de distribution commun (105) en série par rapport à leurs détecteurs de flux d'entrée respectifs (110, 111, 112, 113).

3. Procédé (300) selon la revendication 1, dans lequel chaque dispositif de consommation (200, 201, 202, 203) a une même limite maximale de volume de consommation.

4. Procédé (300) selon la revendication 3, dans lequel les ressources incluent des fluides, de l'électricité ou des données.

5. Procédé (300) selon la revendication 1, dans lequel chaque dispositif de consommation (200, 201, 202, 203) a les mêmes niveaux de consommation, mais qui correspondent à des valeurs de flux différentes pour chaque dispositif de consommation (200, 201, 202, 203).

6. Procédé (300) selon la revendication 1, dans lequel les différentes proportions permises de ressources sont déterminées en utilisant un rapport entre une limite de consommation pour un dispositif (200, 201, 202, 203) et un volume de flux disponible des ressources.

7. Procédé (300) selon la revendication 1, dans lequel un niveau de limite de gestion le plus bas est déterminé à l'aide du rapport suivant :

$$\frac{1}{1+(n-1)*facteur\ de\ flux\ le\ plus\ bas},$$

où il y a n dispositifs de consommation (200, 201, 202, 203) dans le réseau de distribution commun (105), et où le facteur de flux le plus bas correspond à la proportion de ressources permise la plus basse.

8. Procédé (300) selon la revendication 7, dans lequel chaque niveau de limite de gestion supérieur au niveau de limite de gestion le plus bas est déterminé à l'aide du rapport suivant :

$$\frac{(n*facteur\ de\ flux\ imm\acute{e}diatement\ sup\acute{e}rieur)-1}{(n-1)}.$$

9. Procédé (300) selon la revendication 1, dans lequel un nombre minimum de niveaux de limites de gestion est déterminé en fonction du nombre de dispositifs de consommation (200, 201, 202, 203) dans le réseau de distribution commun (105).

10. Procédé (300) selon la revendication 1, dans lequel la valeur de flux de consommation (310) est calculée à une fréquence en fonction d'un rapport cyclique dépendant du débit de la ressource.

FIG. 1

110
Input
Flow
Detector

120
Flow Detector
communication

100
Input
Flow

140
Output flow

200

Consumer

105
Distribution network

111
Flow
Detector

121
Flow Detector
communication

141
Output flow

201

Consumer

112
Flow
Detector

122
Flow Detector
communication

142
Output flow

202

(n−1)
Consumer

113
Flow
Detector

123
Flow Detector
communication

143
Output flow

203

nth
Consumer

FIG. 2

FIG. 3

EP 3 963 834 B1

**EP 3 963 834 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62848642
- JP 2013099174 A
- US 2018005325 A1